# EUROPÄISCHE PATENTSCHRIFT

(11) **EP 1 389 689 B1**
(45) Veröffentlichungstag und Bekanntmachung des Hinweises auf die Patenterteilung: **07.06.2006**
(21) Anmeldenummer: 03102497.9
(22) Anmeldetag: 11.08.2003
(51) Int. Cl.: F16B 7/04

(54) **Führungsschienenkupplung**
Guide rail connector
Connecteur de rail de guide

(30) Priorität: 16.08.2002 DE 10237610
(43) Veröffentlichungstag der Anmeldung: 18.02.2004
(73) Patentinhaber: HILTI Aktiengesellschaft, 9494 Schaan (LI)
(72) Erfinder: Ohlendorf, Oliver, 80686, München (DE)
(74) Vertreter: Wildi, Roland

(56) Entgegenhaltungen:
- US-A- 4 500 235
- US-A- 5 078 534
- US-A- 5 203 135
- US-A- 5 741 083

## Beschreibung

Die Erfindung bezeichnet eine Kupplung für eine zusammensetzbare Führungsschiene für eine Werkzeugmaschine, insbesondere eine Kernbohrmaschine oder eine Diamantsäge.

Führungsschienen für Werkzeugmaschinen dienen der geführten Versetzung dieser während einer Nebenbewegung, insbesondere des Vorschubs.

Nach der DE4339541 weist eine im Wesentlichen prismatische Führungsschiene für eine Kernbohrmaschine neben mehreren äusseren Führungsflächen und einer Axialverzahnung im Inneren eine kreiszylinderförmige Innenführungsfläche auf. Eine axiale Kupplung mehrerer Schienenstücke wird nicht unterstützt.

Nach der US4500235 weist eine axial zusammenkuppelbare Führungsschiene für eine Kernbohrmaschine mit äusseren Führungsflächen und einer Axialverzahnung zwei an ihren einander zugewandten Stirnenden axial aneinander stossende Schienenstücke auf, welche am Stirnende eine Doppelkonusverbindung mit einem Konuszapfen am Stirnende des ersten Schienenstücks und einer Konusbuchse am zugeordneten Stirnende des zweiten Schienenstücks zur axialen Führung aufweisen. Über einen querliegenden Exzenterbolzen im zweiten Schienenstück ist ein im ersten Schienenstück federnd festgelegter Zapfen, welcher quer von dem Exzenterbolzen durchsetzt wird, axial verspannbar. Der fest im ersten Schienenstück angeordnete Konuszapfen führt im getrennten Zustand zu einer unnötigen Verlängerung und Zusatzmasse des ersten Schienenstücks.

Aus der US 5 203 135 ist eine Verbindungsanordnung zur Verbindung von zwei Schienenteilen bekannt. Die Schienenteile sind als Hohlprofile ausgebildet, deren Innenraum konturiert ist und an deren Enden ein Brückenteil in die jeweiligen Innenräume einführbar ist. Das Brückenteil weist dabei eine der Kontur der Innenräume angepasste Aussenkontur auf. Das Brückenteil wird in den Schienenteilen über Schrauben fixiert, die sich einerseits an einer Seitenwand der Schienen abstützen und die andererseits in Gewinden im Brückenteil verschraubt sind.

Die Aufgabe der Erfindung besteht in der Realisierung einer einfachen Führungsschienenkupplung. Ein weiterer Aspekt besteht in der Ausbildung des ersten Schienenstücks ohne unnötige Verlängerung und Zusatzmasse im getrennten Zustand.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist eine Führungsschienenkupplung für eine prismatische Führungsschiene mit zumindest einer äusseren Führungsfläche ein Führungsinnenmass und zwei an ihren einander zugewandten Stirnenden axial aneinander stossende Schienenstücke auf, die über einen Spannmittel lösbar axial zusammengekuppelt sind, wobei das Spannmittel ein dem Führungsinnenmass entsprechendes prismatisches Führungsaussenmass sowie zumindest zwei axial beabstandete Querbohrungen aufweist, welche jeweils von durch je ein Schienenstück quer verlaufende Bolzen durchdrungen sind und wobei zumindest ein Bolzen als Exzenterbolzen ausgebildet ist.

Durch die Kombination sowohl der axialen Führung als auch der axialen Verspannung durch ein Spannmittel mit einem dem Führungsinnenmass der Führungsschiene entsprechenden prismatischen Führungsaussenmass sind separate Führungsmittel verzichtbar. Im getrennten Zustand ist bezüglich des ersten Schienenstücks der Bolzen und das Spannmittel vollständig entfernbar.

Vorteilhaft weist das Spannmittel längs der Achse verlaufende, dünne elastische Dehnungsstege auf, wodurch über deren Elastizität eine Vorspannung aufbringbar ist, welche insbesondere bei Schwingbeanspruchung eine zuverlässige Verbindung ermöglicht.

Vorteilhaft ist das Führungsinnenmass ein Radialmass einer Innenzylindermantelfläche und das Führungsaussenmass des Spannmittels ein Radialmass einer Aussenzylindermantelfläche, wodurch eine hohe axiale Führungsgenauigkeit realisierbar ist.

Vorteilhaft ist das Spannmittel als axial hohle Spannbuchse ausgebildet, wodurch es bei hoher Biegesteifigkeit und Biegefestigkeit nur eine geringe Masse aufweist.

Vorteilhaft sind bei der Spannbuchse die Dehnungsstege als umlaufend versetzte Reststege zwischen Entlastungsbohrungen ausgebildet, welche weiter vorteilhaft im axial mittleren Bereich angeordnet sind, wodurch bei hoher axialer Nachgiebigkeit eine hoher Biegesteifigkeit und Biegefestigkeit realisiert ist.

Vorteilhaft weist das Schienenstück zwei, weiter vorteilhaft diametral angeordnete, verschleissfeste Lagerbuchsen für den quer verlaufenden Bolzen auf, wodurch es bei einer Verspannung durch den Bolzen nicht zum Materialabtrag im Schienenstück kommt.

Vorteilhaft weist der Bolzen zumindest an der Stirnseite eines radial überstehenden Bolzenkopfes eine Drehmitnahme für ein Verspannwerkzeug auf, weiter vorteilhaft einen Innenvierkant oder Innensechskant, wodurch zur Verspannung ein standardisiertes Werkzeug verwendbar ist.

Vorteilhaft ist der Bolzen innen hohl ausgebildet, wodurch er bei hoher Biegesteifigkeit und Biegefestigkeit nur eine geringe Masse aufweist.

Die Erfindung wird bezüglich eines vorteilhaften Ausführungsbeispiels näher erläutert mit:
- Fig. 1: als Führungsschienenkupplung im Querschnitt gemäss der Linie l-l in Fig. 2
- Fig. 2: als Führungsschienenkupplung im Längsschnitt

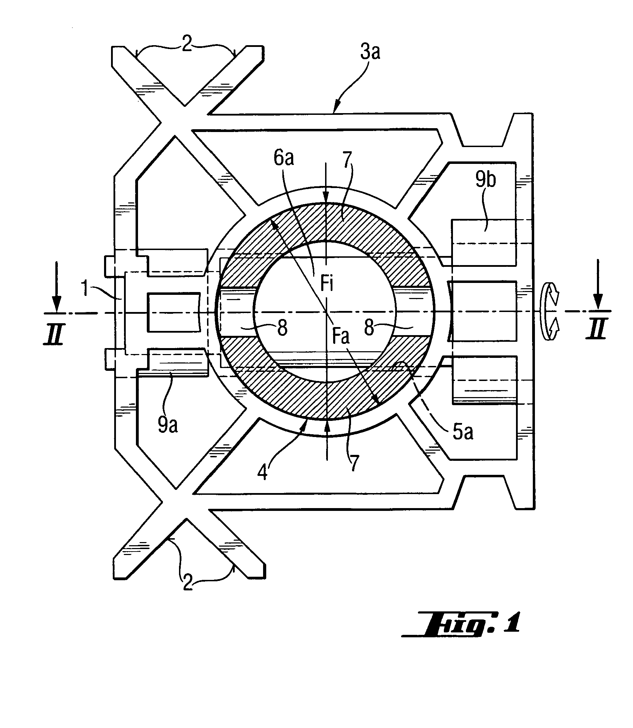

Nach Fig. 1 weist eine Führungsschienenkupplung für eine prismatische Führungsschiene mit einer Axialverzahnung 1 und mit zwei äusseren Führungsflächen 2 ein radiales Führungsinnenmass Fi auf.

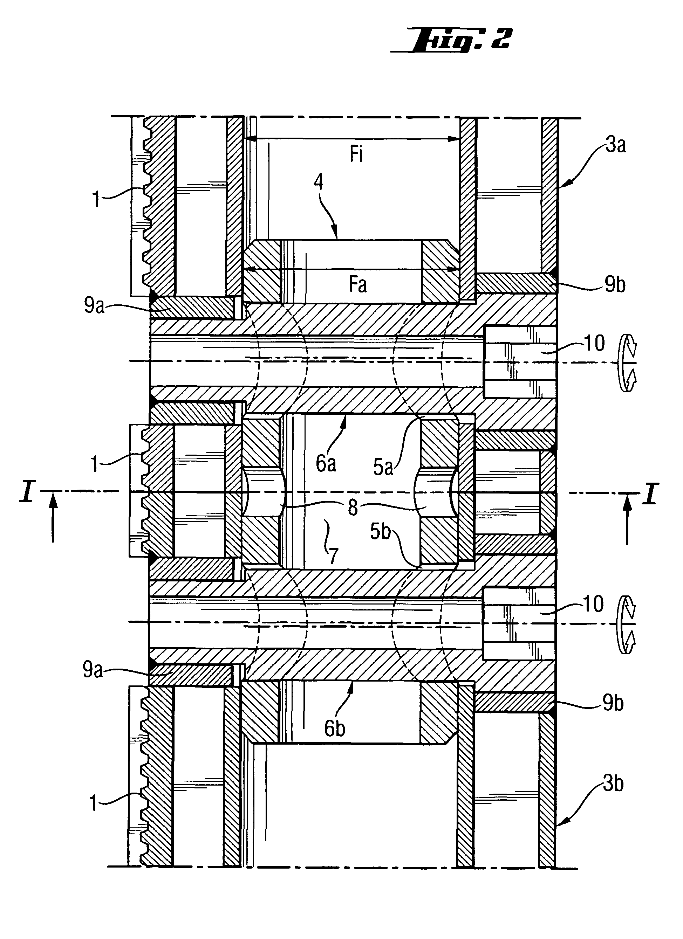

Nach Fig. 2 weist die Führungsschienenkupplung zwei an ihren einander zugewandten Stirnenden axial aneinander stossende Schienenstücke 3a, 3b auf, die über ein als hohle Spannbuchse ausgebildetes Spannmittel 4 lösbar axial zusammengekuppelt sind, welches ein dem radiales Führungsinnenmass Fi spielarm zugeordnetes radiales prismatisches Führungsaussenmass Fa aufweist. Das Spannmittel 4 weist zwei axial beabstandete Querbohrungen 5a, 5b auf, welche jeweils von durch je ein Schienenstück 3a, 3b quer verlaufende Exzenterbolzen 6a, 6b durchdrungen sind. Das Spannmittel 4 weist axial verlaufende, umlaufend versetzte Reststege 7 zwischen Entlastungsbohrungen 8 auf, welche im axial mittleren Bereich angeordnet sind. Die Schienenstücke 3a, 3b weisen jeweils zwei, diametral angeordnete, verschleissfeste Lagerbuchsen 9a, 9b für die quer verlaufenden Exzenterbolzen 6a, 6b auf, welche jeweils an der Stirnseite eines radial überstehenden Bolzenkopfes eine Drehmitnahme 10 für ein Verspannwerkzeug aufweisen und innen hohl ausgebildet sind.

## Patentansprüche

1. Führungsschienenkupplung für eine prismatische Führungsschiene mit zumindest einer äusseren Führungsfläche (2), einem Führungsinnenmass (Fi) und mit zwei an ihren einander zugewandten Stirnenden axial aneinander stossende Schienenstücken (3a, 3b), die über ein Spannmittel (4) und einen dieses durchdringenden, querliegenden Exzenterbolzen (6a, 6b) lösbar axial zusammengekuppelt sind, **dadurch gekennzeichnet, dass** das Spannmittel (4) ein dem Führungsinnenmass (Fi) entsprechendes prismatisches Führungsaussenmass (Fa) aufweist, dass das Spannmittel (4) zumindest zwei axial beabstandete Querbohrungen (5a, 5b) aufweist, welche jeweils von, durch je ein Schienenstück (3a, 3b) quer verlaufende, Bolzen durchdrungen sind und dass zumindest ein Bolzen ein Exzenterbolzen (6a, 6b) ist.

2. Führungsschienenkupplung nach Anspruch 1, **dadurch gekennzeichnet, dass** das Spannmittel (4) längs verlaufende, dünne elastische Dehnungsstege aufweist.

3. Führungsschienenkupplung nach Anspruch 1 oder 2, **dadurch gekennzeichnet, dass** das Führungsinnenmass (Fi) ein Radialmass einer Innenzylindermantelfläche und das Führungsaussenmass (Fa) des Spannmittels (4) ein Radialmass einer Aussenzylindermantelfläche ist.

4. Führungsschienenkupplung nach Anspruch 3, **dadurch gekennzeichnet, dass** das Spannmittel (4) eine axial hohle Spannbuchse ist.

5. Führungsschienenkupplung nach Anspruch 4, **dadurch gekennzeichnet, dass** bei der Spannbuchse (4) die Dehnungsstege umlaufend versetzte Reststege (7) zwischen Entlastungsbohrungen (8) sind, welche optional im axial mittleren Bereich angeordnet sind.

6. Führungsschienenkupplung nach einem der vorherigen Ansprüche, **dadurch gekennzeichnet, dass** das Schienenstück (3a, 3b) zwei, optional diametral angeordnete, verschleissfeste Lagerbuchsen (9a, 9b) für den quer verlaufenden Bolzen aufweist.

7. Führungsschienenkupplung nach einem der vorherigen Ansprüche, **dadurch gekennzeichnet, dass** der Bolzen eine Drehmitnahme (10) für ein Verspannwerkzeug aufweist.

8. Führungsschienenkupplung nach einem der vorherigen Ansprüche, **dadurch gekennzeichnet, dass** der Bolzen innen hohl ausgebildet ist.

## Claims

1. Guide rail connector for a prismatic guide rail with at least one outer guide face (2), an inner guide mass (Fi), and with two rail sections (3a, 3b) pushing axially against each other at their front ends facing each other, which sections are detachably and axially interconnected by a clamping means (4) and transverse eccentric bolt (6a, 6b) penetrating this means,
**characterised in that** the clamping means (4) exhibits a prismatic outer guide mass (Fa) corresponding to the inner guide mass (Fi), **in that** the clamping means (4) exhibits at least two axially spaced transverse holes (5a, 5b) which are each penetrated by bolts running transversely through a rail section (3a, 3b), and **in that** at least one bolt is an eccentric bolt (6a, 6b).

2. Guide rail connector according to Claim 1, **characterised in that** the clamping means (4) exhibits longitudinally running thin, elastic expansion bridges.

3. Guide rail connector according to Clam 1 or 2, **characterised in that** the inner guide mass (Fi) is the radial mass of an inner cylinder jacket surface, and the outer guide mass (Fa) of the clamping means (4) is the radial mass of an outer cylinder jacket surface.

4. Guide rail connector according to Claim 3, **characterised in that** the clamping means (4) is an axial hollow clamping bush.

5. Guide rail connector according to Claim 4, **characterised in that** in the clamping bush (4) the expansion bridges are circumferentially offset residual bridges (7) between load relief holes (8) which are arranged optionally in the axially central region.

6. Guide rail connector according to any one of the preceding claims, **characterised in that** the rail section (3a, 3b) exhibits two, optionally diametrically arranged, wear-resistant bearing bushes (9a, 9b) for the transversely running bolts.

7. Guide rail connector according to any one of the preceding claims, **characterised in that** the bolt exhibits a rotary carrier (10) for a clamping tool.

8. Guide rail connector according to any one of the preceding claims, **characterised in that** the bolt is hollow on the inside.

## Revendications

1. Connecteur de rail de guidage pour un rail de guidage prismatique, avec au moins une surface de guidage extérieure (2), une dimension intérieure de guidage (Fi) et avec deux tronçons de rail qui sont aboutés axialement par leurs extrémités frontales en vis-à-vis (3a, 3b) et qui sont connectés entre eux axialement de manière détachable par l'intermédiaire d'un moyen de serrage (4) et d'un boulon excentrique transversal (6a, 6b) qui traverse celui-ci, **caractérisé en ce que** le moyen de serrage (4) possède une dimension extérieure de guidage prismatique (Fa) correspondant à la dimension intérieure de guidage (Fi), **en ce que** le moyen de serrage (4) est pourvu d'au moins deux perçages transversaux distants axialement (5a, 5b) qui sont chacun traversés par des boulons traversant chacun transversalement un tronçon de rail (3a, 3b) et **en ce qu'**au moins un boulon est un boulon excentrique (6a, 6b).

2. Connecteur de rail de guidage selon la revendication 1, **caractérisé en ce que** le moyen de serrage (4) comporte des nervures d'allongement élastiques minces longitudinales.

3. Connecteur de rail de guidage selon la revendication 1 ou 2, **caractérisé en ce que** la dimension intérieure de guidage (Fi) est une dimension radiale d'une surface périphérique de cylindre intérieur, et la dimension extérieure de guidage (Fa) du moyen de serrage (4) est une dimension radiale d'une surface périphérique de cylindre extérieur.

4. Connecteur de rail de guidage selon la revendication 3, **caractérisé en ce que** le moyen de serrage (4) est une douille de serrage creuse axialement.

5. Connecteur de rail de guidage selon la revendication 4, **caractérisé en ce que**, en ce qui concerne la douille de serrage (4), les nervures d'allongement sont des nervures résiduelles (7) décalées périphériquement entre des perçages de décharge (8), lesquels se trouvent optionnellement dans la zone axiale médiane.

6. Connecteur de rail de guidage selon une des revendications précédentes, **caractérisé en ce que** le tronçon de rail (3a, 3b) comporte deux coussinets anti-usure optionnellement opposés diamétralement (9a, 9b) pour le boulon transversal.

7. Connecteur de rail de guidage selon une des revendications précédentes, **caractérisé en ce que** le boulon comporte un moyen d'entraînement en rotation (10) pour un outil de serrage.

8. Connecteur de rail de guidage selon une des revendications précédentes, **caractérisé en ce que** le boulon est creux intérieurement.
